# EUROPEAN PATENT SPECIFICATION

(11) **EP 1 226 493 B1**
(45) Date of publication and mention of the grant of the patent: **03.05.2006**
(21) Application number: 00976875.5
(22) Date of filing: 03.11.2000
(51) Int. Cl.: G06F 9/00

(54) **BUS ARCHITECTURE AND SHARED BUS ARBITRATION METHOD FOR A COMMUNICATION PROCESSOR**
BUSARCHITEKTUR UND VERTEILTES BUSARBITRIERUNGSVERFAHREN FÜR EINEN KOMMUNIKATIONSPROZESSOR
ARCHITECTURE DE BUS ET PROCEDE D'ARBITRAGE DE BUS PARTAGES DESTINES A UN PROCESSEUR DE COMMUNICATION

(30) Priority: 05.11.1999 US 163816 P
(43) Date of publication of application: 31.07.2002
(73) Proprietor: Analog Devices, Inc., Norwood, MA 02062-9106 (US)
(72) Inventor: HADWIGER, Rainer, R., North Andover, MA 01845 (US); KRIVACEK, Paul, D., Cambridge, MA 02139 (US); SOERENSEN, Joern, DK-9600 Aars (DK); BIRK, Palle, Norwood, MA 02062-9106 (US)
(74) Representative: Walaski, Jan Filip
(86) International application number: PCT/US2000/030305
(87) International publication number: WO 2001/035210

(56) References cited:
- EP-A- 0 426 413
- EP-A- 0 702 307
- EP-A- 0 924 623
- WO-A-99/26155

## Description

### Background

### 1. Field of the Invention

The present invention relates generally to small multiple processor systems, such as mobile phones having a control processor and a signal processor. The invention relates more specifically to systems in which one or more of the processors executes a software program or sequence of steps, which can be altered, modified or upgraded from time to time.

### 2. Related Art

Communications equipment, such as mobile phones performs a variety of signal and data processing functions. In older systems, a digital signal processor (DSP) processed digitized audio signals and a microprocessor control unit (MCU) controlled general system operations including communication set-up and tear-down for an individual equipment unit (e.g., phone). The DSP and the MCU of the simplest conventional systems communicate with each other through single-port and multi-port shared memory, control signals, etc. However, additional features and control options are possible when the DSP and MCU are permitted to communicate with each other, for example through a shared memory. Although systems wherein the DSP and the MCU do not communicate with each other are possible, the evolution of cellular communications to include support for digital data communications as well as audio communications has led to a greater need for the DSP and MCU to communicate with each other.

Communication standards also have been evolving and continue to evolve. Standards are often designed to be extensible, or new features cleverly designed to be backward compatible with an existing standard, so that the new features can be deployed to the field without the need to replace every piece of equipment already in the field. In order to accommodate such evolution, there is great pressure to move away from read-only memory (ROM) resident software or firmware to execute on the DSP or MCU. Modifying ROM resident software or firmware is difficult because generally ROM cannot be written to, except once at the time of manufacture.

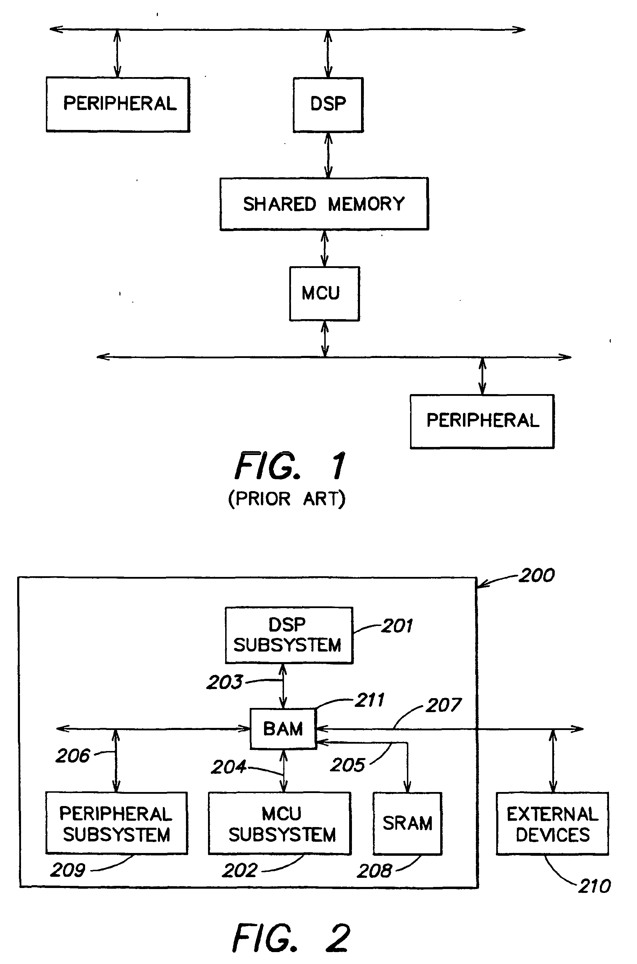

Ultimately, the above-described pressures have resulted in the development of integrated circuits including a DSP, MCU, ROM and RAM. The monetary and size costs of adding RAM to integrated circuit systems have forced the DSP and MCU to share RAM whenever possible. In order to facilitate communication between the DSP and the MCU, and in order to avoid wasting any memory space, which, as noted, is at a premium, they share RAM. System software is loaded into RAM in order to maximize flexibility and the ability to reconfigure systems to stay in conformance with evolving communication standards. However, when memory is shared, for example using the architecture illustrated in Fig. 1, the memory access bandwidth becomes a serious problem.

EP 0924623 discloses a computer system that includes an arbitration mechanism allowing multiple bus masters to access a graphics bus.

EP 0702307 discloses a computer system having a multibus arbiter for arbitrating access of a memory bus between two dissimilar peripheral buses.

The invention is defined by an apparatus according to claim 1 and a method according to claim 19.

According to the invention, there is provided a device according to claim 1.

According to the invention, there is also provided a method of operating a bus arbitration module according to claim 19.

According to one aspect of the invention, an integrated circuit comprises a first data processing subsystem including a first processor connected to a first bus as a bus master; a second data processing subsystem including a second processor connected to a second bus as a bus master; a first slave subsystem including a memory unit, usable by either of the first and second processors, including a fourth bus; and the first, second, third and fourth buses selectively connected to each other through a bus arbitration module arranged to connect the first and second bus masters to the first and second slave subsystems without blocking.

Several variants on this aspect of the invention are possible. For example, the first slave subsystem may include a shared memory connected to the third bus and shared by the first processor through the third bus. There may also be a local memory connected to the first processor, which communicates directly with the local memory. The circuit may also include a direct memory access (DMA) controller and a DMA bus connected to the third bus and the forth bus, whereby data can be moved between the second, third and fourth buses selectively connected to each other through a bus arbitration module arranged to connect the first and second bus masters to the first and second slave subsystems without blocking.

According to another aspect of the invention, an integrated circuit comprises: a data communications device, comprising a communications system having a first internal bus, a supervision and control system having a second internal bus; a first slave device system having a third internal bus; a second slave device system having a fourth internal bus; a direct memory access (DMA) system having a fifth internal bus; and the first, the second, the third, the fourth and the fifth internal buses interconnected through a bus arbitration module (BAM).

In an aspect of the invention related to telecommunications systems, an integrated circuit device used in a telephone handset, the device may comprise in one integrated circuit a DSP, an MCU, a shared system memory, a DSP bus to which the DSP is connected, an MCU bus to which the MCU is connected, a peripheral unit and a peripheral bus to which the peripheral unit is connected, a memory bus to which the shared system memory is connected, and a BAM which selectively connects the DSP bus and the MCU bus to the memory bus and the peripheral bus, wherein when the DSP and the MCU request access to different buses, access occurs without blocking.

Several variants on the various aspects of the invention are possible. For example, the first slave subsystem may include a shared memory connected to the third bus and shared by the first processor through the third bus. There may also be a local memory connected to the first processor, which communicates directly with the local memory. The circuit may also include a direct memory access (DMA) controller and a DMA bus connected to the third bus and the fourth bus, whereby data can be moved between the first slave subsystem and the second slave subsystem without intervention by the first processor or the second processor. There may further be a memory access interface (MAI) connecting one of the third and fourth buses to the local memory. The fourth bus may include a connection to an external device, which may be a memory device.

The integrated circuit of such aspects of the invention may further comprise system memory accessed by both the data communications system and the supervision and control system through the BAM and the third internal bus.

The device may be configured so the DMA system communicates data directly between the system memory and the second slave devices system. The second slave devices system may include system support elements, communication support elements and input/output (I/O) elements. The system support elements may include an interrupt controller, the communication support elements and the I/O elements may include a generic serial port. The communication system may include a digital signal processor (DSP), while the supervision and control system may include a microprocessor control unit (MCU). The DSP and MCU may each communicate with an internal device over the first and second internal buses and also with the system memory through the BAM and the third internal bus. The fourth bus may include a connection to an external device, which may be a memory device.

In yet another variation, the device may further comprise a DMA controller and a DMA bus controlled by the DMA controller wherein the BAM further selectively connects the DMA bus between the memory bus and the peripheral bus. The peripheral unit system may also include one or more support elements, including system support elements, communication support elements and I/O support elements. In these variations; the DSP and MCU may each communicate with a local device over the DSP and MCU local bus, respectively, and also communicate with the system memory through the BAM and the memory bus. There may also be an external bus including a connection to an external device, such as a memory device. The resource of some devices may further comprise a memory used by at least the first one and the second one of the plural bus masters. The BAM may further comprise a DMA bus selectively interconnecting two of the plural slave buses. The plural resources may include one or more support elements, including system support elements and as an interrupt controller, communication support elements such as GSM communication support elements and I/O support elements such as a generic serial port. The first bus master may further comprise a DSP. The second bus master may further comprise an MCU. The device may further include an external slave bus including a connection to an external device, which may be a memory device.

According to further aspects of the invention, there are methods of prioritizing and granting bus access requests. A method of prioritizing and granting bus access requests may comprise granting the bus access request of a requestor asserting a high priority interrupt if no requestor is asserting the high priority interrupt, granting the bus access request of a requestor owning the current request slot. According to the method, access may be granted to a processor operating on a real-time signal when the processor has been in a wait state for a time-out period. The time-out period may be programmable. The indication that the processor has been in the wait state longer than the time-out period may be assertion of a high priority interrupt. When the request is granted to the owner of the current request slot, the table of request slot owners may be updated. When the request is granted to the highest entry on the round robin list, both the round robin list and the table of request slot owners may be updated.

### Brief Description of the Drawings

In the drawings in which like reference designations indicate like elements:
Fig. 1 is a schematic block diagram of conventional bus architecture including a shared memory;
Fig. 2 is a simplified schematic block diagram of an exemplary bus architecture embodying aspects of the present invention;
Fig. 3 is a more detailed block diagram of the bus architecture of Fig. 2; and
Fig. 4 is a flowchart of an exemplary arbitration method embodying aspects of the invention.

### Detailed Description

The present invention will be better understood upon reading the following detailed description of some exemplary embodiments thereof.

An overview of the architecture of one exemplary embodiment of aspects of the present invention is now given in connection with Fig. 2.

When in the following discussion, a bus is mentioned, a set of signal paths connecting the functional units of the circuit, system or device under discussion is meant A bus may include an addressing component and a data carrying component, each sometimes individually referred to as a bus. Most commonly, buses are configured to have two or more parallel signal paths carrying multi-bit wide data and address information, although serial buses are also known.

Fig. 2 depicts a device 200, for example implemented as an integrated circuit. The device includes a digital signal processor (DSP) subsystem 201 and a microcontroller unit (MCU) subsystem 202. Within DSP subsystem 201 is a local bus (not shown) to which a processor is connected. A bus 203 provides an external (to the DSP subsystem 201) connection to the DSP subsystem 201 for other elements of the device 200; bus 203 may also be the local bus within DSP subsystem 201. Similarly, MCU subsystem 202 includes a local bus, the MCU bus 204, which provides an external (to the MCU subsystem 202) connection of the MCU subsystem 202 to other elements of the device 200. Each of the subsystems 201 and 202 discussed thus far includes a processor, thus providing the device 200 with plural processors. In order to improve the performance of each processor, it has been given its own subsystem (201, 202), together with its own local bus (203, 204, respectively). These will be discussed in greater detail, below. As noted above, the DSP subsystem 201 and MCU subsystem 202 include a DSP (discussed below) and an MCU (discussed below), respectively. Each of the DSP and MCU is a bus master, meaning each can request access through its respective local bus to other elements of the device 200. Each can also include plural internal buses, if design requirements are better met by such a structure.

Device 200 further includes three other buses 205, 206 and 207 to which various additional elements are connected. The other elements of the device 200 are bus slaves, which respond to requests for access from the bus masters. Memory, for example static random access memory (SRAM) which may be used as a shared system memory, is connected to bus 205. Various peripheral devices by which device 200 can perform its necessary functions are contained in a peripheral subsystem 209 connected to a peripheral bus 206. Finally, external devices 210, such as flash ROM, for example, are connected to an external bus 207. The partitioning of functions among the various devices and buses mentioned above preferrably is optimized by the designer for any particular purpose. In the embodiment presently described, various optimization choices have been made to render device 200 suitable for use as the heart of wireless mobile communications devices, such as a Global System for Mobile communications (GSM) telephone, a telephone supporting another communication protocol such as Code Division Multiple Access (CDMA), or devices supporting the Wireless Application Protocol (WAP).

The buses 203, 204, 205, 206 and 207 described above are interconnected through a bus arbitration module (BAM) 211 including a Direct Memory Access (DMA) subsystem (not shown). The configuration and operation of the BAM 211 is described in greater detail, below. That configuration and operation determines which buses can communicate with each other and at what times. The design and operation of the BAM 211 is optimized to guarantee a configurable minimum access bandwidth by the DSP subsystem 201 and the MCU subsystem 202 to any of the other system elements required, and to prevent one subsystem 201, 202 from locking out the other subsystem 201,202.

In the illustrative embodiment of device 200, all bus masters, including DSP subsystem 201 and MCU subsystem 202, employ a common, unified address space. A number of important advantages can be obtained by use of a unified address space. For example, DSP subsystem 201 and MCU subsystem 202 can exchange data or code in SRAM 208 merely by passing a pointer to the data or code to be exchanged, by writing the pointer to a globally known location. According to another advantage of a unified address space, the logic required for address decoding in the BAM 211 is greatly simplified because the same decoding is required regardless of which bus master or bus slave is involved in a particular transaction. According to yet another advantage of the unified address space, a very symmetrical system is achieved. Since both the DSP and MCU use the same address space, code can be more easily ported from one device to the other. Therefore, the designer can better partition code between the DSP and MCU, avoiding critical path problems and processor overloading.

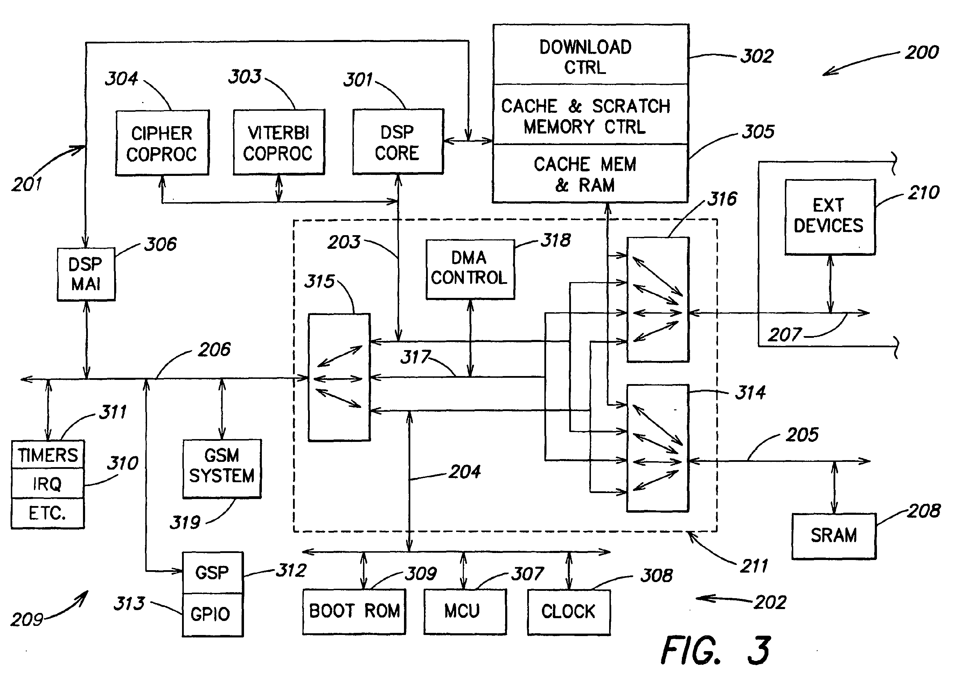

The illustrative embodiment is now described in greater detail, in connection with Fig. 3. First, the DSP subsystem 201 is described.

At the heart of the DSP subsystem 201 is an Analog Devices 218X DSP core 301. Other types of DSP core 301 could be used, including those implemented as part of an MCU or other devices implementing DSP capabilities in hardware or software. Also included in the DSP subsystem 201 are a memory management system 302 including a download controller, cache and scratch memory controller and cache memory, and DSP-specific peripherals including a Viterbi co-processor 303 and a generic ciphering engine 304. The functionality of such DSP specific peripherals could be implemented in the DSP or external hardware and/or software.

Notably absent from the DSP subsystem 201 is an internal read only memory (ROM). Instead, DSP code is dynamically downloaded or cached into the DSP cache memory 305. By employing a cache memory 305, the downloading of DSP code occurs transparently to the user. By using conventional caching techniques, not all of the DSP code required for a particular function, for example a speech encoder, need be downloaded at any particular point in time. Rather, only those fragments needed immediately for use by the DSP need be downloaded, resulting in less memory being required within the DSP subsystem 201. Although the foregoing discussion demonstrates that the DSP subsystem 201 does not require an internal ROM, one could be included if desired, without departing from the spirit of the invention.

DSP code can be loaded into the cache from either internal system memory 208 or from an external memory, for example flash ROM connected as an external device 210 to bus 207. Taking advantage of such flexibility minimizes conflicts between the DSP subsystem 201 and the MCU subsystem 202 with respect to memory access. Critical code should be placed where the minimum overhead and latency will be imposed during actual system operation.

For maximum flexibility with respect to software partitioning, all bus systems 204, 205, 206 and 207 are accessible by the DSP subsystem 201 through DSP bus 203 and BAM 211.

The DSP subsystem 201 also has some internal static RAM 305, which can be used for code having critical timing requirements and for data. The internal static RAM 305 of the DSP 301 is also accessible to the MCU subsystem 202 via a memory access interface (MAI) module 306 connected to the peripheral bus 206.

The MCU subsystem 202 includes an ARM7TDMI MCU core 307 (from ARM Ltd. of the United Kingdom) or other suitable MCU access. The MCU subsystem 202 further includes clock generation circuits 308 and a small ROM 309 containing bootstrap code for loading externally stored software.

The memory 208 of the illustrative embodiment is an internal static RAM (SRAM) for storing data and code. It is accessible to both the DSP subsystem 201 and the MCU subsystem 202 through their respective buses 203 and 204, when connected to the memory bus 205 through the BAM 211. Time critical MCU subsystem code can be placed in this memory, to separate it from the time critical code for the DSP subsystem. Less time critical DSP code can be also stored in static RAM 208.

The peripheral subsystem 209 includes a generic interrupt controller 310, a generic timer 311, a generic serial port 312, a general purpose input/output (GPIO) port 313 and a GSM I/O system 314. The generic interrupt controller 310 collects all of the interrupts received by the system, groups them together in software configurable groups and assigns them a priority level. Thus, a fully programmable interrupt priority scheme is implemented. In the illustrative embodiment, three independent interrupt controllers (not shown) also exist, one for each of the DSP subsystem 201, the MCU subsystem 202 and internally to the BAM 211. The generic timer module 311 is a fully software configurable timer module, used to maintain system timing. The timer module can generate interrupts and set or clear external connections to the device 200. The generic serial port 312 is a fully software programmable sequencer with specific hardware for implementing serial port standards. The generic serial port 312 can be programmed to serve most known serial standards. Thus, each user of device 200 can create unique hardware specific serial interfaces without modifying any of the internal structures of device 200. The GPIO 313 functionality allows various external connections to device 200 to be used for any particular unique hardware or software specific interface requirements.

The external bus 207 provides a high-speed connection to the device 200 suitable for connecting elements such as flash ROM, requiring a parallel interface.

As described above, all of the buses 203, 204, 205, 206 and 207 are interconnected through the bus arbitration module (BAM) 211. The bus arbitration module includes three arbitration units 314, 315 and 316 and a direct memory access (DMA) subsystem including a DMA bus 317 and DMA controller 318 described below. As will be described below, in part by having a separate arbitration unit for each slave bus, the BAM 211 is constructed and arranged to avoid blocking when multiple bus masters each request access to resources connected to the different slave buses.

The three bus arbitration units 314, 315 and 316 each correspond to one of the three principal system buses, the memory bus 205, the peripheral bus 206 and the external bus 207, respectively. The three arbitration units 314, 315 and 316 are structurally identical (the arbitration methods can be different), but are each dedicated to their own bus 205, 206 and 207.

One arbitration unit 314 selectively connects the memory bus 205 to one of the DSP bus 203, the MCU bus 204, the DMA bus (discussed below) or the DSP cache.

A second arbitration unit 315 selectively connects the peripheral bus 206 to one of the DSP bus 203, the MCU bus 204 and the DMA bus (discussed below).

A third arbitration unit 316 selectively connects the external bus 207 to one of the DSP bus 203, the MCU bus 204, the DMA (discussed below) and the DSP cache.

It should be evident that the structure illustrated in Fig. 3 is non-blocking, as now discussed. Bus masters, e.g., DSP core 301 and MCU 307, are each connected to their own bus. Local communication by a bus master on its own bus in completely independent of local communication by another bus master on its own bus. Resources, i.e., bus slaves, are distributed among plural slave buses, e.g., buses 205, 206, 207. If one bus master requests access to a resource on one slave bus and another bus master requests access to another resource on another slave bus, no blocking occurs because independent arbitration units handle the separate requests. Thus, the designer can optimize the design by separating shared resources according to which bus master is the primary user of the resource. Other non-blocking structures are possible, using, for example a multi-port, non-blocking parallel switch structure can be used.

The separation of shared resources can be done as follows. If the DSP core 301 uses a first resource more than the MCU 307, but the MCU 307 uses a second resource more than the DSP core 301, then the first and second resources should be attached to different slave buses.

Each arbitration unit 314, 315, 316 grants access to its bus 205, 206, 207 according to the method described below. An active bus select signal from a requestor to the arbitration unit 314, 315, 316 indicates a request for access and arbitration. The arbitration unit 314, 315, 316 either returns a wait signal for delaying access or grants the access. When the bus select signal of a requestor granted access becomes inactive, it indicates to the arbitration unit that the next arbitration cycle can start.

To maximize the performance of the device 200, the DSP cache access can be performed in a block mode, reading (for example) up to 12 words at a time. In the illustrative embodiment, words are 16 bits long, however other lengths can be used as required by particular bus designs as known in the art. Thus full advantage can be taken of the bandwidth provided by, for example, flash ROM, connected as an external device 210 to the external bus 207. The method of arbitration is discussed in greater detail, below.

The DMA subsystem of the bus arbitration module includes a DMA bus 317 and a multi-channel DMA controller 318. In the illustrative embodiment a 16 channel DMA controller 318 is used. The DMA controller 318 is a bus master, like the DSP core 301 and MCU 307. The DMA bus 317 interconnects the three arbitration units 314, 315, 316, so that a DMA can be performed between devices connected to any of the three buses, the memory bus 205, the peripheral bus 206 and the external bus 207. Data or code can be transferred from any address location on one of the three buses 205, 206 and 207 to any address location on another of the three buses 205, 206 and 207. The DMA controller 318 includes one word of transfer memory which is the memory used to perform the transfer mentioned above and described in detail below. The DMA controller 318 also includes other memory used for purposes known in the art. Other memory sizes could be used, if desired for a particular purpose. The DMA controller 318 reads in one word from a source location during a first memory cycle then writes the word out to a destination location during a second, subsequent memory cycle.

The DMA controller 318 governs the operation of the DMA bus 317. The DMA controller 318 handles data transfers for both interrupt-driven I/O devices and for memory devices. The DMA controller 318 includes separate full duplex channels with identical functionality. Each channel is controlled and configured by either the MCU subsystem 202 or the DSP subsystem 201 through the peripheral bus 206. After the DMA controller 318 transfers a programmable number of address locations, it gives an interrupt to the interrupt controller 310.

The DMA controller 318 can perform the following tasks, giving additional functionality to the system. A RAM buffer can be created between an I/O device and, for example, the MCU subsystem 202. Thus, the number of interrupts required to handle I/O data can be reduced. In such an instance, the DMA controller transfers a block of a predetermined or programmable number of words of data between a memory module, such as SRAM 208 and the I/O peripheral within the peripheral subsystem 209. The DMA controller can move a block of data, such as a table or program, from a flash ROM, among the external devices 210, to the internal DSP subsystem data memory, program memory or cache. Finally, the DMA controller can effect the copying of any large memory blocks from one location to another in the system, as may be required.

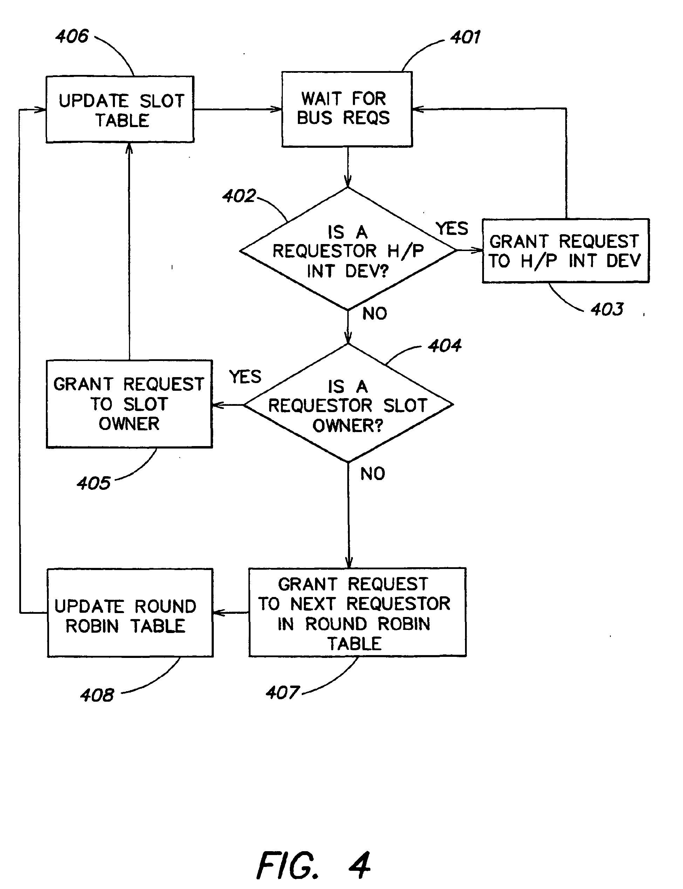

Next, the arbitration method of the illustrative embodiment is discussed in connection with Fig. 4. In the illustrative device 200, the DSP subsystem 201, the MCU subsystem 202 and the DMA controller 318 are bus masters.

According to one simple arbitration method, each device has a unique priority level assigned. In such a system, the highest priority device requesting access to a bus is always given access. However, such a scheme can result in bandwidth starvation of lower priority devices, if the higher priority devices constantly demand access. Another common arbitration method is the round-robin arbitration method in which each device is given a priority, which depends, upon the placement of the device on a rotating list. The requesting device at the highest position on the list receives the access requested. Typically, the top device on the priority list is then moved to the bottom of the list. Neither of these conventional methods satisfies all the requirements of the device described herein.

Since the bandwidth requirements of the peripheral subsystem 209 are not very high, arbitration for the peripheral bus 206 is performed by the round-robin method. It can be assumed that there are no back-to-back requests by one bus master for the peripheral bus.

With respect to the external bus 207 and the memory bus 205, the expected bandwidth requirements of the DSP bus 203, the MCU bus 204 and DMA bus 317 must be taken into account. A round robin-table is combined with a fixed table having 15 programmable slots. Depending upon the relative bandwidth requirements of the DSP subsystem 201, MCU subsystem 202 and DMA controller 318, the 15 slots are distributed suitably among the three bus masters.

The resulting composite arbitration method is performed as follows. The arbitration units (Fig. 3, 314, 315, 316) wait for bus requests to arrive, 401. Then the arbitration unit checks for high priority interrupts, 405. For example, if the DSP subsystem 201 has been placed into a wait state, it cannot handle the serial ports, which it is required to process. Therefore, if such a wait state of the DSP subsystem 201 occurs, a high priority interrupt is issued. When such a high priority interrupt occurs and is detected, 402 access is granted to the bus master responsible for the high priority interrupt having been issued, 403. After the access is complete, the arbitration unit resumes waiting for bus requests, 401. Next, a determination is made by reference to the fixed table of programmable slots as to whether one of the requestors is the current owner of the access slot, 404. If so, at 405, access is granted to the current slot owner and the slot table is updated so the slot owner is now the next bus master listed therein, 406. If the current slot owner is not one of the requestors, 404, then the request is granted in accordance with the current state of the round robin table, 407. The round-robin table is then updated, 408, as is the slot owner table, 406.

Substantial portions of the arbitration method described are performed asynchronously, for example by asynchronous logic. By using asynchronous processes, the arbitration method processes bus requests immediately, without losing bus cycles. Only the updates 406, 408 are performed on a clock cycle basis. The updates, 406, 408 occur on the clock cycle in which a bus access is granted.

It is possible to have multiple devices capable of generating high priority interrupts in such an arbitration method, but an ancillary prioritization must be made between them in the case where two or more high priority interrupts are simultaneously detected.

The present invention has now been described in connection with a number of specific embodiments thereof. However, numerous modifications, which are contemplated as falling within the scope of the present invention, should now be apparent to those skilled in the art. Therefore, it is intended that the scope of the present invention be limited only by the scope of the claims appended hereto.

## Claims

1. A device (200), comprising:
plural master buses (203, 204, 317);
plural bus masters (201, 202, 301, 307, 318), each connected to a corresponding one of the plural master buses;
plural slave buses (205, 206, 207);
plural resources (208, 209, 210) used by the plural bus masters, each of the plural resources connected to a corresponding one of the plural slave buses;
a bus arbitration module BAM (211) configured to selectively connect any of the plural master buses (203, 204, 317) to any of the plural slave buses (205, 206, 207) so that no blocking occurs when the plural bus masters (201, 202, 301, 307, 318) each access a different one of the plural resources (208, 209, 210), the bus arbitration module being **characterized in** including plural arbitration units (314-316), each of the arbitration units being associated with a respective slave bus, each arbitration unit being arranged to selectively connect its associated slave bus to any of the plural master buses, the bus arbitration unit further being configured to selectively guarantee a configurable minimum access bandwidth by each of the plural bus masters (201, 202, 301, 307, 318) to at least a first one of the plural slave buses (205, 206, 207), the bus arbitration module (211) comprising a programmable element that can be selectively configured so as to determine the relative guaranteed minimum access bandwidth values of the plural bus masters (201, 202, 301, 307, 318) to the first one of the plural slave buses (205, 206, 207).

2. The device of claim 1, included in a single integrated circuit, and wherein:
the first one of the plural bus masters comprises a first data processing subsystem (201) including a first processor; and
the second one of the plural bus masters comprises a second data processing subsystem (202) including a second processor.

3. The device of claim 1 or 2, included in a data communications device, and wherein:
the first one of the plural bus masters comprises a communications system; and
the second one of the plural bus masters comprises a supervision and control system.

4. The device of any of claims 1 to 3, included in a single integrated circuit used in a telephone handset, and wherein:
the first one of the plural bus masters comprises a digital signal processor DSP; and
the second one of the plural bus masters comprises a microprocessor control unit MCU.

5. The device of any of claims 1 to 4, wherein the plural resources comprise a memory (208) used by at least the first one and the second one of the plural bus masters.

6. The device of any of claims 1 to 5, wherein:
the plural bus masters further comprise a direct memory access DMA controller (318) in addition to the first and second ones of the plural bus masters;
the plural master buses further comprise a DMA bus (317) to which the DMA controller is connected; and
the bus arbitration module is configured to selectively couple the DMA bus to two of the plural slave buses at the same time so as to enable the DMA controller to cause data to be transferred between two of the plural resources.

7. The device of any of claims 1 to 6, wherein the plural resources comprise system support elements, communication support elements and input/output (I/O) elements.

8. The device of claim 7, wherein the system support elements include an interrupt controller, the communication support elements include global system for mobile GSM communications support elements and the I/O elements include a generic serial port.

9. The device of any of claims 1 to 3 and 5 to 8, wherein the first one of the plural bus masters comprises a digital signal processor DSP.

10. The device of any of claims 1 to 3 and 5 to 9, wherein the second one of the plural bus masters comprises a microprocessor control unit MCU.

11. The device of any of claims 1 to 10, wherein the plural slave buses comprise an external slave bus (207) including a connection to an external device (210).

12. The device of claim 11, wherein the external device includes a memory device.

13. The device of any of claim 1 to 12, further comprising:
a local memory connected to the first one of the plural bus masters for communication directly therewith, not through the bus arbitration module

14. The device of claim 13, further comprising:
a memory access interface MAI connecting one of plural slave buses to the local memory.

15. The device of claim 14, wherein the one of the plural slave buses includes a connection to an external device.

16. The device of claim 15, wherein the external device to which the one of the plural slave buses is connected includes a memory device.

17. The device of any of claims 1 to 16, wherein:
the programmable element comprises a programmable table of slots assigned to the plural bus masters; and
the guaranteed minimum access bandwidth by the first one of the plural bus masters to the first one of the plural slave buses and the guaranteed minimum access bandwidth by the second one of the plural bus masters to the first one of the plural slave buses are determined based upon the number of slots that are assigned, respectively, to the first and second ones of the plural bus masters.

18. The device of claim 17, wherein the programmable table can be configured so that the first one of the plural bus masters is assigned a greater number of slots in the table than the second one of the plural bus masters.

19. A method of operating a bus arbitration module BAM (211) to control access to first and second resources (208, 209, 210) coupled to first and second slave buses (205, 206, 207) by at least first and second bus masters (201, 202, 301, 307, 318) coupled to first and second master buses (203, 204, 317), respectively, the bus arbitration module including plural arbitration units (314-316), each of the arbitration units being associated with a respective slave bus, comprising:
operating the bus arbitration module (211) such that each arbitration unit selectively connects its associated slave bus to any of the plural master buses, so that no blocking occurs when the first and second bus masters (201, 202, 301, 307, 318) each access a different one of the first and second resources (208, 209,210); and
configuring a programmable element to selectively determine a guaranteed minimum access bandwidth for each of the first and second bus masters (201, 202, 301, 307,318) to the first slave bus (205, 206, 207).

20. The method of claim 19, wherein the programmable element comprises a table of slots assigned to the bus masters, with one of the slots serving as an access slot and at least one of the bus masters being assigned to multiple slots, and wherein the method further comprises:
granting a bus access request of a bus master asserting a high priority interrupt;
if no bus master is asserting a high priority interrupt, determining whether a bus master making a bus access request is currently assigned to the access slot in the table, and granting the bus access request of that bus master if it is determined that the bus master is currently assigned to the access slot in the table; and
if no bus master is asserting a high priority interrupt and no bus master making a request is assigned to the access slot, granting a bus access request of a bus master highest on a round robin priority list.

21. The method of claim 20, wherein the step of granting a bus access request of a bus mater asserting a high priority interrupt further comprises:
generating the high priority interrupt for a processor operating on a real-time signal when the processor has been in a wait state for a time-out period.

22. The method of claim 21, wherein the time-out period is programmable.

23. The method of any of claims 20 to 22, wherein the programmable element can be configured so that the first bus master is assigned more slots in the table than the second bus master.

24. The method of any of claims 20 to 23, wherein the step of determining whether a bus master making a bus access request is currently assigned, further comprises:
if the bus access request of a bus master assigned to the access slot is granted, updating the table so that a different one of the bus master entries in the table is assigned to the access slot.

25. The method of any of claims 20 to 24, wherein the step of granting a bus access request of a bus master highest on a round robin priority list further comprises:
if the bus access request of a bus master highest on the round robin priority list is granted, updating the round robin priority list and also updating the table so that a different one of the bus master entries in the table is assigned to the access slot.

26. The method of any of claims 20 to 25, further comprising:
assigning a number of slots in the table to each bus master based on the relative bandwidth requirements of the bus masters.

27. The method of any of claims 20 to 26, further comprising:
configuring the programmable element to determine a guaranteed minimum access bandwidth by each of the first and second bus masters to the second slave bus.

## Revendications

1. Dispositif (200), comprenant :
plusieurs bus maîtres (203, 204, 317) ;
plusieurs maîtres de bus (201, 202, 301, 307, 318), chacun connecté à l'un, correspondant, des bus maîtres ;
plusieurs bus esclaves (205, 206, 207) ;
plusieurs ressources (208, 209, 210) utilisées par les maîtres de bus, chacune des ressources étant connectée à l'un, correspondant, des bus esclaves ;
un module (211) d'arbitrage de bus (BAM pour Bus Arbitration Module) configuré pour connecter sélectivement l'un quelconque des bus maîtres (203, 204, 317) à l'un quelconque des bus esclaves (205, 206, 207) de façon qu'il ne se produise pas d'encombrement lorsque les maîtres de bus (201, 202, 301, 307, 318) accèdent chacun à l'une, différente, des ressources (208, 209, 210), le module d'arbitrage de bus étant **caractérisé en ce qu'**il comprend plusieurs unités (314 à 316) d'arbitrage, chacune des unités d'arbitrage étant associée à un bus esclave respectif, chaque unité d'arbitrage étant agencée pour connecter sélectivement son bus esclave associé à l'un quelconque des bus maîtres, l'unité d'arbitrage de bus étant en outre configurée pour garantir sélectivement une largeur de bande minimale, configurable, d'accès par chacun des maîtres de bus (201, 202, 301, 307, 318) à au moins un premier des bus esclaves (205, 206, 207), le module (211) d'arbitrage de bus comprenant un élément programmable qui peut être configuré sélectivement de façon à déterminer les valeurs relatives de largeur de bande minimale garantie d'accès des maîtres de bus (201, 202, 301, 307, 318) au premier des bus esclaves (205, 206, 207).

2. Dispositif selon la revendication 1, inclus dans un unique circuit intégré, et dans lequel :
le premier des maîtres de bus comprend un premier sous-système (201) de traitement de données incluant un premier processeur ; et
le deuxième des maîtres de bus comprend un second sous-système (202) de traitement de données incluant un second processeur.

3. Dispositif selon la revendication 1 ou 2, inclus dans un dispositif de transmission de données, et dans lequel :
le premier des maîtres de bus comprend un système de transmission ; et
le deuxième des maîtres de bus comprend un système de supervision et de commande.

4. Dispositif selon l'une quelconque des revendications 1 à 3, inclus dans un unique circuit intégré utilisé dans un combiné téléphonique, et dans lequel :
le premier des maîtres de bus comprend un processeur de signal numérique (DSP pour Digital Signal Processor) ; et
le deuxième des maîtres de bus comprend une unité de commande à microprocesseur (MCU pour Microprocessor Control Unit).

5. Dispositif selon l'une quelconque des revendications 1 à 4, dans lequel les ressources comprennent une mémoire (208) utilisée par au moins le premier et le deuxième des maîtres de bus.

6. Dispositif selon l'une quelconque des revendications 1 à 5 :
dans lequel les maîtres de bus comprennent en outre un régisseur (318) d'accès direct à la mémoire (DMA pour Direct Memory Access) en plus des premier et deuxième des maîtres de bus ;
dans lequel les bus maîtres comprennent en outre un bus (317) de DMA auquel est connecté le régisseur de DMA ; et
dans lequel le module d'arbitrage de bus est configuré pour raccorder sélectivement le bus de DMA à deux des bus esclaves en même temps de façon à permettre au régisseur de DMA de faire que des données soient transférées entre deux des ressources.

7. Dispositif selon l'une quelconque des revendications 1 à 6, dans lequel les ressources comprennent des éléments supports de système, des éléments supports de communication et des éléments d'entrée/sortie (E/S).

8. Dispositif selon la revendication 7, dans lequel les éléments supports de système comprennent un gestionnaire d'interruptions, les éléments supports de communication comprennent le système mondial pour les télécommunications mobiles (GSM pour Global System for Mobile Communications), et les éléments d'E/S comprennent un port série générique.

9. Dispositif selon l'une quelconque des revendications 1 à 3 et 5 à 8, dans lequel le premier des maîtres de bus comprend un processeur de signal numérique, DSP.

10. Dispositif selon l'une quelconque des revendications 1 à 3 et 5 à 9, dans lequel le deuxième des maîtres de bus comprend une unité de commande à microprocesseur, MCU.

11. Dispositif selon l'une quelconque des revendications 1 à 10, dans lequel les bus esclaves comprennent un bus esclave externe (207) incluant une connexion à un dispositif externe (210).

12. Dispositif selon la revendication 11, dans lequel le dispositif externe comprend un dispositif de mémoire.

13. Dispositif selon l'une quelconque des revendications 1 à 12, comprenant en outre :
une mémoire locale connectée au premier des maîtres de bus pour communication directement avec lui, sans passer par le module d'arbitrage de bus.

14. Dispositif selon la revendication 13, comprenant en outre :
une interface d'accès à la mémoire (MAI pour Memory Access Interface) connectant l'un des bus esclaves à la mémoire locale.

15. Dispositif selon la revendication 14, dans lequel ledit un des bus esclaves comprend une connexion à un dispositif externe.

16. Dispositif selon la revendication 15, dans lequel le dispositif externe auquel ledit un des bus esclaves est connecté comprend un dispositif de mémoire.

17. Dispositif selon l'une quelconque des revendications 1 à 16 :
dans lequel l'élément programmable comprend une table programmable de tranches affectées aux maîtres de bus ; et
dans lequel la largeur de bande minimale garantie d'accès par le premier des maîtres de bus au premier des bus esclaves et la largeur de bande minimale garantie d'accès par le deuxième des maîtres de bus au premier des bus esclaves sont déterminées en se basant sur le nombre des tranches qui sont affectées, respectivement, au premier et au deuxième des maîtres de bus.

18. Dispositif selon la revendication 17, dans lequel la table programmable peut être configurée de façon à affecter au premier des maîtres de bus un nombre plus grand de tranches de la table qu'au deuxième des maîtres de bus.

19. Procédé de mise en oeuvre d'un module (211) d'arbitrage de bus, BAM, pour commander l'accès à des première et deuxième ressources (208, 209, 210) raccordées à des premier et deuxième bus esclaves (205, 206, 207) par au moins des premier et deuxième maîtres de bus (201, 202, 301, 307, 318) raccordés, respectivement, à des premier et deuxième bus maîtres (203, 204, 317), le module d'arbitrage de bus comprenant plusieurs unités (314 à 316) d'arbitrage, chacune des unités d'arbitrage étant associée à un bus esclave respectif, comprenant :
la mise en oeuvre du module (211) d'arbitrage de bus de façon que chaque unité d'arbitrage connecte sélectivement son bus esclave associé à l'un quelconque des bus maîtres de sorte qu'il ne se produise pas d'encombrement lorsque les premier et deuxième maîtres de bus (201, 202, 301, 307, 318) accèdent chacun à l'une, différente, des première et deuxième ressources (208, 209, 210) ; et
la configuration d'un élément programmable pour déterminer sélectivement une largeur de bande minimale garantie d'accès pour chacun des premier et deuxième maîtres de bus (201, 202, 301, 307, 318) au premier bus esclave (205, 206, 207).

20. Procédé selon la revendication 19, dans lequel l'élèment programmable comprend une table de tranches affectées aux maîtres de bus, l'une des tranches servant de tranche d'accès et de multiples tranches étant affectées à au moins l'un des maîtres de bus, et dans lequel le procédé comprend en outre :
la satisfaction d'une demande d'accès de bus d'un maître de bus présentant une interruption à priorité élevée ;
si aucun maître de bus ne présente d'interruption à priorité élevée, le fait de déterminer si un maître de bus faisant une demande d'accès de bus est actuellement affecté à la tranche d'accès de la table, et la satisfaction de la demande d'accès de bus de ce maître de bus s'il est déterminé que le maître de bus est actuellement affecté à la tranche d'accès de la table ; et
si aucun maître de bus ne présente d'interruption à priorité élevée et si aucun maître de bus faisant une demande n'est affecté à la tranche d'accès, la satisfaction d'une demande d'accès de bus d'un maître de bus le plus élevé sur une liste de priorité à tour de rôle.

21. Procédé selon la revendication 20, dans lequel l'étape de satisfaction d'une demande d'accès de bus d'un maître de bus présentant une interruption à priorité élevée comprend en outre :
la production d'une interruption à priorité élevée pour un processeur opérant sur un signal en temps réel lorsque le processeur a été dans un état d'attente pendant une période de temps écoulée.

22. Procédé selon la revendication 21, dans lequel la période de temps écoulée est programmable.

23. Procédé selon l'une quelconque des revendications 20 à 22, dans lequel l'élément programmable peut être configuré de façon que le premier maître de bus soit affecté à plus de tranches de la table que le deuxième maître de bus.

24. Procédé selon l'une quelconque des revendications 20 à 23, dans lequel l'étape de détermination du fait qu'un maître de bus faisant une demande d'accès de bus est actuellement affecté, comprend en outre :
si la demande d'accès de bus d'un maître de bus affecté à la tranche d'accès est satisfaite, la mise à jour de la table de façon qu'une, différente, des entrées du maître de bus de la table soit affectée à la tranche d'accès.

25. Procédé selon l'une quelconque des revendications 20 à 24, dans lequel l'étape de satisfaction d'une demande d'accès de bus d'un maître de bus plus élevé sur une liste de priorité à tour de rôle comprend en outre :
si la demande d'accès de bus d'un maître de bus plus élevé sur la liste de priorité à tour de rôle est satisfaite, la mise à jour de la liste de priorité à tour de rôle et la mise à jour également de la table de façon qu'une, différente, des entrées de maître de bus de la table soit affectée à la tranche d'accès.

26. Procédé selon l'une quelconque des revendications 20 à 25, comprenant en outre :
l'affectation d'un certain nombre de tranches de la table à chacun des maîtres de bus en se basant sur les besoins relatifs en largeur de bande des maîtres de bus.

27. Procédé selon l'une quelconque des revendications 20 à 26, comprenant en outre :
la configuration de l'élément programmable pour déterminer une largeur de bande minimale garantie d'accès par chacun des premier et deuxième maîtres de bus au deuxième bus esclave.

## Patentansprüche

1. Vorrichtung (200), die folgendes aufweist:
mehrere Master-Busse (203, 204, 317);
mehrere Bus-Master (201, 202, 301, 307, 318), die jeweils an einem entsprechenden der mehreren Master-Busse angeschlossen sind;
mehrere Slave-Busse (205, 206, 207);
mehrere Betriebsmittel (208, 209, 210), die durch die mehreren Bus-Master verwendet werden, wobei jedes der mehreren Betriebsmittel an einen entsprechenden der mehreren Slave-Busse angeschlossen ist;
ein Buszuteilungsmodul BAM (211), das zum selektiven Anschließen von irgendeinem der mehreren Master-Busse (203, 204, 317) an irgendeinen der mehreren Slave-Busse (305, 206, 207) konfiguriert ist, so dass kein Blockieren auftritt, wenn die mehreren Bus-Master (201, 202, 301, 307, 318) jeweils auf unterschiedliche der mehreren Betriebsmittel (208, 209, 210) zugreifen, wobei das Buszuteilungsmodul **dadurch gekennzeichnet ist, dass** es mehrere Zuteilungseinheiten (314-316) enthält, wobei jede der Zuteilungseinheiten zu einem jeweiligen Slave-Bus gehört, wobei jede Zuteilungseinheit angeordnet und eingerichtet ist, um ihren zugehörigen Slave-Bus selektiv an irgendeinen der mehreren Master-Busse anzuschließen, wobei die Buszuteilungseinheit weiterhin zum selektiven Garantieren einer konfigurierbaren minimalen Zugriffsbandbreite durch jeden der mehreren Bus-Master (201, 202, 301, 307, 318) zu wenigstens einem ersten der mehreren Slave-Busse (205, 206, 207) konfiguriert ist, wobei das Buszuteilungsmodul (211) ein programmierbares Element aufweist, das selektiv konfiguriert sein kann, um die relativen garantierten minimalen Zugriffsbandbreitenwerte der mehreren Bus-Master (201, 202, 301, 307, 318) zu dem ersten der mehreren Slave-Busse (205, 206, 207) zu bestimmen.

2. Vorrichtung nach Anspruch 1, die in einer einzelnen integrierten Schaltung enthalten ist, und wobei:
der erste der mehreren Bus-Master ein erstes Datenverarbeitungsuntersystem (201) mit einem ersten Prozessor aufweist; und
der zweite der mehreren Bus-Master ein zweites Datenverarbeitungsuntersystem (202) mit einem zweiten Prozessor aufweist.

3. Vorrichtung nach Anspruch 1 oder 2, die in einer Datenkommunikationsvorrichtung enthalten ist, und wobei:
der erste der mehreren Bus-Master ein Kommunikationssystem aufweist; und
der zweite der mehreren Bus-Master ein Überwachungs- und Steuersystem aufweist.

4. Vorrichtung nach einem der Ansprüche 1 bis 3, die in einer einzelnen integrierten Schaltung enthalten ist, die in einem Telefonhörer verwendet wird, und wobei:
der erste der mehreren Bus-Master einen digitalen Signalprozessor (DSP) aufweist; und
der zweite der mehreren Bus-Master eine Mikroprozessorsteuereinheit (MCU) aufweist.

5. Vorrichtung nach einem der Ansprüche 1 bis 4, wobei die mehreren Betriebsmittel einen Speicher (208) aufweisen, der durch wenigstens den ersten und den zweiten der mehreren Bus-Master verwendet wird.

6. Vorrichtung nach einem der Ansprüche 1 bis 5, wobei:
die mehreren Bus-Master zusätzlich zum ersten und zum zweiten der mehreren Bus-Master weiterhin eine Direktzugriffsspeicher-(DMA-)Steuerung (318) aufweisen;
die mehreren Master-Busse weiterhin einen DMA-Bus (317) aufweisen, an dem die DMA-Steuerung angeschlossen ist; und
das Buszuteilungsmodul konfiguriert ist, um den DMA-Bus selektiv mit zweien der mehreren Slave-Busse gleichzeitig zu koppeln, um zu ermöglichen, dass die DMA-Steuerung veranlasst, dass Daten zwischen zweien der mehreren Betriebsmittel transferiert werden.

7. Vorrichtung nach einem der Ansprüche 1 bis 6, wobei die mehreren Betriebsmittel Systemunterstützungselemente, Kommunikationsunterstützungselemente und Eingabe/Ausgabe-(I/O-)Elemente aufweisen.

8. Vorrichtung nach Anspruch 7, wobei die Systemunterstützungselemente eine Unterbrechungssteuerung enthalten, die Kommunikationsunterstützungselemente Kommunikationsunterstützungselemente für ein globales System für Mobilfunk GSM enthalten und die I/O-Elemente einen allgemeinen seriellen Anschluss enthalten.

9. Vorrichtung nach einem der Ansprüche 1 bis 3 und 5 bis 8, wobei der erste der mehreren Bus-Master einen digitalen Signalprozessor DSP aufweist.

10. Vorrichtung nach einem der Ansprüche 1 bis 3 und 5 bis 9, wobei der zweite der mehreren Bus-Master eine Mikroprozessorsteuereinheit MCU aufweist.

11. Vorrichtung nach einem der Ansprüche 1 bis 10, wobei die mehreren Slave-Busse einen externen Slave-Bus (207) mit einem Anschluss zu einer externen Vorrichtung (210) aufweisen.

12. Vorrichtung nach Anspruch 11, wobei die externe Vorrichtung eine Speichervorrichtung enthält.

13. Vorrichtung nach einem der Ansprüche 1 bis 12, die weiterhin folgendes aufweist:
einen lokalen Speicher, der zur Kommunikation direkt mit ihm und nicht über das Buszuteilungsmodul an den ersten der mehreren Bus-Master angeschlossen ist

14. Vorrichtung nach Anspruch 13, die weiterhin folgendes aufweist:
eine Speicherzugriffsschnittstelle MAI, die einen von mehreren Slave-Bussen an den lokalen Speicher anschließt.

15. Vorrichtung nach Anspruch 14, wobei der eine der mehreren Slave-Busse einen Anschluss an eine externe Vorrichtung enthält.

16. Vorrichtung nach Anspruch 15, wobei die externe Vorrichtung, an die einer der mehreren Slave-Busse angeschlossen ist, eine Speichervorrichtung enthält.

17. Vorrichtung nach einem der Ansprüche 1 bis 16, wobei:
das programmierbare Element eine programmierbare Tabelle von Slots aufweist, die den mehreren Bus-Mastern zugeordnet sind; und
die garantierte minimale Zugriffsbandbreite durch den ersten der mehreren Bus-Master zu dem ersten der mehreren Slave-Busse und die garantierte minimale Zugriffsbandbreite durch den zweiten der mehreren Bus-Master zu dem ersten der mehreren Slave-Busse basierend auf der Anzahl von Slots bestimmt sind, die jeweils dem ersten und dem zweiten der mehreren Bus-Master zugeordnet sind.

18. Vorrichtung nach Anspruch 17, wobei die programmierbare Tabelle so konfiguriert sein kann, dass der erste der mehreren Bus-Master einer größeren Anzahl von Slots in der Tabelle als der zweite der mehreren Bus-Master zugeordnet ist.

19. Verfahren zum Betreiben eines Buszuteilungsmoduls BAM (211) zum Steuern eines Zugriffs auf ein erstes und ein zweites Betriebsmittel (208, 209, 210), die mit einem ersten und einem zweiten Slave-Bus (205, 206, 207) gekoppelt sind, durch wenigstens einen ersten und einen zweiten Bus-Master (201, 202, 301, 307, 318), die jeweils mit einem ersten und einem zweiten Master-Bus (203, 204, 317) gekoppelt sind, wobei das Buszuteilungsmodul mehrere Zuteilungseinheiten (314-316) enthält, wobei jede der Zuteilungseinheiten zu einem jeweiligen Slave-Bus gehört, welches Verfahren folgendes aufweist:
Betreiben des Buszuteilungsmoduls (211) so, dass jede Zuteilungseinheit ihren zugehörigen Slave-Bus selektiv an irgendeinen der mehreren Master-Busse anschließt, so dass kein Blockieren auftritt, wenn der erste und der zweite Bus-Master (201, 202, 301, 307, 318) jeweils auf ein anderes des ersten und des zweiten Betriebsmittels (208, 209, 210) zugreift; und
Konfigurieren eines programmierbaren Elements zum selektiven Bestimmen einer garantierten minimalen Zugriffsbandbreite für jeden des ersten und des zweiten Bus-Masters (201, 202, 301, 307, 318) zu dem ersten Slave-Bus (205, 206, 207).

20. Verfahren nach Anspruch 19, wobei das programmierbare Element eine Tabelle von Slots aufweist, die den Bus-Mastern zugeordnet sind, wobei einer der Slots als Zugriffsslot dient und wobei wenigstens einer der Bus-Master mehreren Slots zugeordnet ist, und wobei das Verfahren weiterhin folgendes aufweist:
Gewähren einer Buszugriffsanforderung eines Bus-Masters, der eine Unterbrechung hoher Priorität aktiviert;
wenn kein Bus-Master eine Unterbrechung hoher Priorität aktiviert, Bestimmen, ob ein Bus-Master, der eine Buszugriffsanforderung durchführt, gegenwärtig dem Zugriffsslot in der Tabelle zugeordnet ist, und Gewähren der Buszugriffsanforderung dieses Bus-Masters, wenn bestimmt wird, dass der Bus-Master gegenwärtig dem Zugriffsslot in der Tabelle zugeordnet ist; und
wenn kein Bus-Master eine Unterbrechung hoher Priorität aktiviert und kein Bus-Master, der eine Anforderung durchführt, dem Zugriffsslot zugeordnet ist, Gewähren einer Buszugriffsanforderung eines Bus-Masters, der in einer Round-Robin-Prioritätsliste der höchste ist.

21. Verfahren nach Anspruch 20, wobei der Schritt zum Gewähren einer Buszugriffsanforderung eines Bus-Masters, der eine Unterbrechung hoher Priorität aktiviert, weiterhin folgendes aufweist:
Erzeugen der Unterbrechung hoher Priorität für einen Prozessor, der bei einem Echtzeitsignal arbeitet, wenn der Prozessor für eine Auszeitperiode in einem Wartezustand gewesen ist.

22. Verfahren nach Anspruch 21, wobei die Auszeitperiode programmierbar ist.

23. Verfahren nach einem der Ansprüche 20 bis 22, wobei das programmierbare Element so konfiguriert sein kann, dass der erste Bus-Master mehr Slots in der Tabelle als der zweite Bus-Master zugeordnet wird.

24. Verfahren nach einem der Ansprüche 20 bis 23, wobei der Schritt zum Bestimmen, ob ein Bus-Master, der eine Buszugriffsanforderung durchführt, gegenwärtig zugeordnet ist, weiterhin folgendes aufweist:
wenn die Buszugriffsanforderung eines Bus-Masters, der dem Zugriffsslot zugeordnet ist, gewährt wird, Aktualisieren der Tabelle, so dass ein anderer der Bus-Mastereinträge in der Tabelle dem Zugriffsslot zugeordnet wird.

25. Verfahren nach einem der Ansprüche 20 bis 24, wobei der Schritt zum Gewähren einer Buszugriffsanforderung eines Bus-Masters, der in einer Round-Robin-Prioritätsliste der höchste ist, weiterhin folgendes aufweist:
wenn die Buszugriffsanforderung eines Bus-Masters, der in der Round-Robin-Prioritätsliste der höchste ist, gewährt wird, Aktualisieren der Round-Robin-Prioritätsliste und auch Aktualisieren der Tabelle, so dass ein anderer der Bus-Mastereinträge in der Tabelle dem zugriffsslot zugeordnet wird.

26. Verfahren nach einem der Ansprüche 20 bis 25, das weiterhin folgendes aufweist:
Zuordnen einer Anzahl von Slots in der Tabelle zu jedem Bus-Master basierend auf den relativen Bandbreitenerfordenissen der Bus-Master.

27. Verfahren nach einem der Ansprüche 20 bis 26, das weiterhin folgendes aufweist:
Konfigurieren des programmierbaren Elements, um eine garantierte minimale Zugriffsbandbreite durch jeden des ersten und des zweiten Bus-Masters zu dem zweiten Slave-Bus zu bestimmen.
